(19) Europäisches Patentamt
European Patent Office
Office européen des brevets

(11) Publication number: 0 260 104
A2

(12) # EUROPEAN PATENT APPLICATION

(21) Application number: 87307912.3

(22) Date of filing: 08.09.87

(51) Int. Cl.4: C 08 F 12/22
C 08 F 8/12

(30) Priority: 09.09.86 US 905372

(43) Date of publication of application:
16.03.88 Bulletin 88/11

(84) Designated Contracting States:
AT BE CH DE ES FR GB GR IT LI LU NL SE

(71) Applicant: CELANESE CORPORATION
1211 Avenue of the Americas
New York New York 10036 (US)

(72) Inventor: Elmore, Jimmy D.
3526 St. Germain Court,
Louisville, Kentucky (US)

(74) Representative: De Minvielle-Devaux, Ian Benedict Peter
CARPMAELS & RANSFORD 43, Bloomsbury Square
London WC1A 2RA (GB)

(54) **Process for the preparation of poly (vinylphenol) by simultaneous methanolysis and polymerization of 4-acetoxystryene.**

(57) Vinylphenol polymers are prepared by simultaneously polymerizing and hydrolyzing 4-acetoxystyrene. Vinylphenol polymers are useful in photoresists and the formulation of metal treatment compositions.

EP 0 260 104 A2

## Description

### Process for the Preparation of Poly (Vinylphenol) by Simultaneous Methanolysis and Polymerization of 4-Acetoxystyrene

#### Background of Invention

The field of art to which this invention pertains is homopolymers and copolymers of vinylphenol.

Homopolymers and copolymers of 4-hydroxystyrene, or p-vinylphenol as it is also called, are known compositions which have many uses, such as in the manufacture of metal treatment compositions and photoresists. Polymers of p-vinylphenol can be made by polymerizing p-vinylphenol itself. However, p-vinylphenol is an unstable compound and must be refrigerated to prevent it from polymerizing spontaneously. Even under refrigeration, the monomer will slowly polymerize to low molecular weight polymers. 4-Acetoxystyrene, the acetic acid ester of p-vinylphenol, is a stable monomer which can be readily homopolymerized and copolymerized to low, medium and high molecular weight polymers. After polymerization, the phenolic ester group can be hydrolyzed to produce p-vinylphenol polymers.

Corson et. al., Journal of Organic Chemistry, 23, 544-549 (1958), describe a 5 step process for making p-vinylphenol from phenol. The phenol is first acetylated to p-hydroxyacetophenone, which is then acetylated to p-acetoxyacetophenone. This compound is hydrogenated to p-acetoxyphenylmethyl carbinol which is then dehydrated to p-acetoxystyrene. The p-acetoxystyrene is saponified to p-vinylphenol using potassium hydroxide.

The ester interchange reaction of poly 4-acetoxystyrene in methanol using sodium methylate is described in U.S. Patent No. 2,276,138. About 84 percent of the acetate groups are removed by the interchange reaction. Packham, in the Journal of the Chemical Society, 1964, 2617-2624, describes the hydrolysis of crosslinked poly-4-hydroxystyrene by refluxing the polymer in alkaline aqueous dioxane for 2 days. In U.S. Patent No. 4,544,704, a copolymer of styrene and p-isopropenylphenylacetate is hydrolyzed with aqueous sodium hydroxide in methanol and toluene using a small amount of benzyltrimethylammonium chloride as a phase transfer agent. Arshady et. al., Journal of Polymer Science 12, 2017-2025 (1974), hydrolyzed copolymers of styrene and acetoxystyrene to the vinylphenol polymer using hydrazine hydrate in dioxane.

The hydrolysis or methanolysis of polymers of 4-acetoxystyrene is very difficult to carry to 90 percent or above completion. Also, it is extremely difficult to remove all traces of alkali metal salts which can be detrimental for some applications and uses of the vinylphenol polymer.

#### Summary of Invention

This invention pertains to a process for simultaneously polymerizing and hydrolyzing 4-acetoxystyrene monomer to polymers of 4-vinylphenol. More specifically, the invention relates to a polymerization and methanolysis process using free radical catalysts and ammonium bases. Even more specifically, the invention pertains to a process for polymerizing and hydrolyzing 4-acetoxystyrene monomer to polymers of 4-vinylphenol using free radical catalysts for the polymerization reaction and ammonium hydroxide or quaternary ammonium bases as the methanolysis catalysts.

By the process of this invention, 4-acetoxystyrene monomer is dissolved in methanol and is simultaneously polymerized and hydrolyzed to polymers of 4-vinylphenol by heating at about 50°C to about 80°C in the presence of a free radical polymerization catalyst and ammonium base for a time sufficient to convert the monomer to polymer and to hydrolyze at least 90 percent of the acetoxy groups to phenolic groups. When the polymerization and hydrolysis are completed, the methyl acetate in the reaction and the quaternary ammonium base in the form of its decomposition products are removed by heating at about 50°C to about 150°C. When ammonium hydroxide is used as the methanolysis catalyst, it is removed by heat and by a wet carbon dioxide sparge. The 4-vinylphenol polymer is recovered as a methanol solution or can be recovered neat.

#### Detailed Description of Invention

4-Acetoxystyrene can be used alone in this invention to form homopolymers of 4-vinylphenol. 4-Acetoxystyrene can also be used with other monomers to form copolymers of 4-vinylphenol. The copolymerizable monomers are styrene and monomers which can be copolymerized with styrene. Examples of such comonomers in addition to styrene are vinyl toluene, alpha-methylstyrene, the diene monomers, such as butadiene, the acrylate and methylacrylate ester monomers, such as methyl acrylate, methyl methacrylate, ethyl acrylate, butyl acrylate, butyl methacrylate and 2-ethylhexyl acrylate. Additional monomers include the polymerizable acids such as acrylic acid, methacrylic acid, maleic anhydride and maleic acid, fumaric acid and the like. The preferred comonomer is styrene. The comonomers are used in the amount of about 1 to about 99 parts of comonomer to about 99 to about 1 part of 4-acetoxystyrene. The preferred amounts of monomers used in this invention will be about 25 to about 75 parts of 4-acetoxystyrene and about 75 to about 25 parts of monomer copolymerizable therewith.

In carrying out the process in this invention, the a-acetoxystyrene monomer is dissolved in a solvent which is miscible with water in the amount of about at least 10 weight percent water in the solvent. Preferred solvents are those which are completely miscible with water. Examples of useful solvents are methanol, ethanol, isopropanol, butanols, and glycols such as ethylene glycol, propylene glycol, diethylene glycol, diproprylene glycol, and the like. Additional solvents include the ethers of the glycols, such as ethylene glycol monomethyl ether, ethylene glycol monoethyl ether, ethylene glycol monopropyl ether, ethylene glycol monobutyl ether, diethylene

glycol monomethyl ether, and the like. Mixtures of water miscible solvents and water immiscible solvents can also be used. Examples of water immiscible solvents are toluene and xylene. Regardless of which solvents are used, the solution must contain at least about 4 equivalents of methanol per equivalent of acetoxy group in order to conduct the process of this invention. The process of this invention is conducted using about 25 to about 75 weight percent solvent based on the total weight of reactants and solvent, and preferably about 40 to about 60 weight percent solvent.

The polymerization catalysts used in this invention are any of the well known free radical polymerization catalysts. These catalysts are of the azo or peroxygen type and include benzoyl peroxide, lauroyl peroxide, acetyl peroxide, cumene hydroperoxide, paramethane hydroperoxide, tertiary butyl peroctoate, tertiary butyl perbenzoate, ditertiay butyl peroxide, methylethyl ketone peroxide, hydrogen peroxide, ethyl-3,3-di(t-amylperoxy) butyrate, azodiisobutyronitrile, dimethylazodiiosobutyrate and the like. Such catalyst are generally used in the amount of about 0.1 to about 10.0 weight percent based on the total weight of monomer and preferably about 1 to about 3 weight percent.

The methanolysis catalyst used in this invention are ammonium bases such as ammonium hydroxide and quaternary ammonium hydroxide. Useful quaternary ammonium hydroxides have the following formula:

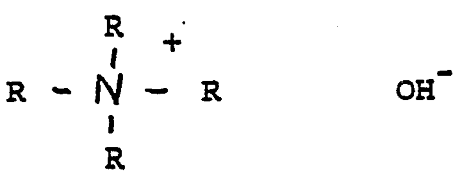

wherein each R is an organic radical which contains 1 to 8 carbon atoms. R can be aliphatic or aromatic and can be the same or different. Examples of the organic radicals are methyl, ethyl, isopropyl, butyl, benzyl, methylbenzyl, dimethylbenzyl and hydroxyethyl. Examples of useful quaternary hydroxides are tetramethyl ammonium hydroxide, ethyl trimethyl ammonium hydroxide, diethylmethyl ammonium hydroxide, tetraethyl ammonium hydroxide, benzyl trimethyl ammonium hydroxide, and choline. A preferred quaternary ammonium hydroxide is tetramethyl ammonium hydroxide.

The quaternary ammonium hydroxides are used in this invention in the amount of about 0.05 to about 1 mole of the quaternary ammonium hydroxide per mole of acetoxystyrene. The preferred amount of quaternary ammonium hydroxide is about 0.1 to about 0.2 mole per mole of acetoxystyrene.

Ammonium hydroxide is used in this invention as an aqueous solution of ammonia at a concentration of about 10 weight percent ammonia in water up to about 30 weight percent. Preferably the solution will contain about 25 to about 30 weight percent ammonia. Ammonia gas can also be used in this invention. Ammonia gas is introduced into the reactor as a sparge below the surface of the reaction solution. The amount of ammonium hydroxide used in the reaction is that amount approximately equivalent to the acetoxy groups that are to be hydrolyzed. Usually about 1 to about 1.5 moles of ammonium hydroxide are utilized per equivalent of acetoxystyrene. The same equivalents of ammonia gas are also used in this reaction. However, when ammonia gas is used, a sufficient amount is introduced throughout the reaction to keep the solution saturated.

In carrying out the process of this invention, the 4-acetoxystyrene monomer with or without comonomers is simultaneously reacted in methanol with a free radical polymerization catalyst and an ammonium base methanolysis catalyst at a temperature of about 50°C to about 80°C for a time sufficient to polymerize the 4-acetoxystyrene monomer and to hydrolyze the acetoxy groups to form polyvinylphenol. The reaction can be conducted under conditions wherein the methylacetate formed in the reaction is refluxed without removal However, the methylacetate can also be removed as soon as it is formed. The removal of methylacetate facilitates the hydrolysis reaction since its removal shifts the hydrolysis to the phenol side of the equilibrium reaction.

The process of this invention can be conducted by adding all of the components to the reactor at the beginning. However, in order to control the exothermic reaction, it is preferred to add the monomer and polymerization catalyst slowly to the solution of methanol and hydrolysis catalyst.

When the methanolysis and polymerization is completed, heating is then conducted at a temperature of about 50°C to about 150°C to distill off methylacetate and the decomposition products of the quaternary ammonium hydroxide.

Quaternary ammonium hydroxides are noted for their instability to heat. This instability is useful in this invention since after the hydrolysis reaction, heat can be used to decompose the quaternary ammonium hydroxide to low boiling decomposition products which can readily be removed from the reaction solution.

When ammonium hydroxide is used as the methanolysis catalyst, the ammonia is removed by introducing wet carbon dioxide gas into the reaction solution as a sparge below the solution surface. During the introduction of carbon dioxide gas, the temperature is held at about 110°C to about 150°C. The carbon dioxide reacts with the ammonia to form ammonium carbonate which, under the influence of heat, decomposes to ammonia, carbon dioxide and water which then can be distilled or sparged out with nitrogen from the reaction solution.

After removal of the methylacetate and quaternary ammonium decomposition products or ammonia, the resulting vinylphenol polymer can be used per se as its solution or the polymer can be recovered as a solid either by removal of all solvents by vacuum distillation or by precipitating the polymer from the solution.

The process of this invention is described in more detail in the following examples. All parts and percentages are by weight unless otherwise indicated.

Example 1

To a suitable reactor equipped with a dropping funnel and a Vigreux, Claisen Adapter are added 80 parts of methanol and 28.44 parts of a 20 percent solution in methanol of tetramethyl ammonium hydroxide. To the dropping funnel are added 101.25 parts of 4-acetoxystyrene monomer and 3.99 parts of dimethylazodiisobutyrate. The temperature in the reactor is raised to 65°C and the monomer catalyst solution is added over a 3 hour and 45 minute period while holding the pot temperature at 68°C to 74°C. Distillate, 50 parts, is removed with the head temperature at 49°C to 58°C. Heating is continued for 11 hours and 30 minutes with the pot temperature being held at 72°C to 83°C and the head temperature being held at 55°C to 65°C. An additional 59 parts of distillate are removed during this heating period.

The resulting product, at 61 percent solids, has a Gardner-Holdt viscosity at 25°C of $Z_2$, a Gardner color of 2-3, a percent hydrolysis of 93 and a weight per phenolic hydroxyl of 139.1.

Example 2

To a suitable reactor equipped with 2 dropping funnels and a Vigreux, Claisen Adapter are added 80 parts of methanol. 23 parts of methanol and 18.3 parts of a 28 percent aqueous ammonium hydroxide solution are added to one of the funnels. 101.25 parts of 4-acetoxystyrene monomer and 4 parts dimethylazodiisobutyrate are added to the second funnel. The temperature in the reactor is raised to 63°C and the contents of both dropping funnels are added over 3 hours and 15 minutes while keeping the temperature in the reactor at 66°C to 71°C. The head temperature during this period is 45°C to 58°C. Both dropping funnels are rinsed with a total of 10 parts of methanol which are added to the reactor. Heating is then continued for 2 hours and 5 minutes with the reactor temperature at 72°C to 79°C and the head temperature at 63°C to 67°C. 40 parts of methanol are added to the reactor. Heating is then continued for 5 hours and 25 minutes with the reactor temperature at 73°C to 77°C and the head temperature at 52°C to 64°C. An additional 40 parts of methanol and 9.2 parts of 28 percent aqueous ammonia are then added. Heating is then continued for 3 hours and 10 minutes with the reactor temperature at 78°C and the head temperature at 54°C to 58°C. An additional 9.2 parts of 28 percent aqueous ammonia are then added and heating is continued for 5 hours and 45 minutes with the reactor temperature at 79°C to 82°C and the head temperature at 60°C to 65°C. Volatiles are then removed from the reaction product by vacuum distillation to a reactor temperature of 70°C and a vacuum of 70 millimeters mercury. The resinous product is poured onto foil and cooled. It is ground to a powder and then heated in a vacuum oven for 7 hours with the temperature slowly being raised from 85°C to 140°C and with a vacuum of 200 to 70 millimeters mercury.

The resulting polyvinylphenol product has a weight per phenolic hydroxyl of 145.4 and a percent hydrolysis of 88.9.

The polymers and copolymers of p-vinylphenol obtained by the process of this invention can be used to make compositions useful in the treatment of metal surfaces to impart corrosion resistance and paint adhesion characteristics to the metal as described in U.S. Patent No. 4,333,015, which is hereby incorporated by reference.

The principles, preferred embodiments and modes of operation of the present invention have been described in the foregoing specification. The invention which is intended to be protected herein, however, is not to be construed as limited to the particular forms disclosed, since these are to be regarded as illustrating rather than restrictive. Variations and changes may be made by those skilled in the art without departing from the spirit of the invention.

**Claims**

1. A process for preparing polymers of p-vinylphenol which comprises reacting 4-acetoxystyrene dissolved in methanol simultaneously with a free radical polymerization catalyst and an ammonium base at a temperature of about 50°C to about 80°C for a time sufficient to polymerize the 4-acetoxystyrene monomer to polymer and to hydrolyze the acetoxy groups to phenol groups.

2. The process of Claim 1 wherein the ammonium base is a quaternary ammonium hydroxide.

3. The process of Claim 2 wherein the quaternary ammonium hydroxide is tetramethyl ammonium hydroxide.

4. The process of Claim 2 wherein, after the simultaneous reaction is completed, heating at a temperature of about 50°C to about 150°C is conducted to distill off the methyl acetate formed in the reaction and the decomposition products of the quaternary ammonium hydroxide.

5. The process of Claim 1 wherein the ammonium base is ammonium hydroxide.

6. The process of Claim 5 wherein, after the simultaneous reaction is completed, sparging with wet carbon dioxide gas at a temperature of about 110°C to about 180°C is conducted to form ammonium carbonate which immediately decomposes to ammonia, carbon dioxide and water and removing the decomposition products by sparging with nitrogen or by distillation.